# EUROPEAN PATENT APPLICATION

(11) **EP 2 719 736 A1**
(43) Date of publication of application: **16.04.2014**
(21) Application number: 12796812.1
(22) Date of filing: 05.06.2012
(51) Int. Cl.: C09J 133/06, C09J 7/02, C09J 11/06, C09J 153/00

(54) **ADHESIVE COMPOSITION AND HIGHLY DISMANTLABLE ADHESIVE TAPE**

(30) Priority: 09.06.2011 JP 2011129280
(71) Applicant: DIC Corporation, Tokyo 174-8520 (JP); Osaka City University, Osaka-shi, Osaka 558-8585 (JP)
(72) Inventor: MATSUMOTO, Akikazu, Osaka-shi Osaka 558-8585 (JP); SATO, Eriko, Osaka-shi Osaka 558-8585 (JP); MORINO, Akinori, Kitaadachi-gun Saitama 362-8577 (JP); TANAKA, Koujirou, Takaishi-shi Osaka 592-0001 (JP); NAKAMURA, Atsushi, Sakura-shi Chiba 285-8668 (JP)
(74) Representative: Albrecht, Thomas
(86) International application number: PCT/JP2012/064485
(87) International publication number: WO 2012/169501

(57) **Abstract**

The present invention provides an easily dismantlable adhesive composition as an adhesive composition containing an acrylic polymer (X) that contains a (meth)acrylate monomer as a main monomer component, and an acid catalyst or an acid generator, in which the acrylic polymer (X) contains a poly(meth)acrylate chain (A) that is formed of repeating units derived from a carboxyl precursor group-containing (meth)acrylate monomer (a), and a number of the repeating units is 10 or greater.

## Description

### Technical Field

The present invention relates to an easily dismantlable adhesive tape, which is stuck to an object or fixes articles to each other and then is easily taken off from the object or makes it easy to dismantle the fixed articles after a certain period of time has passed, and an easily dismantlable adhesive composition used to produce the easily dismantlable adhesive tape.

### Background Art

As bonding means having excellent workability and a high reliability of adhesiveness, adhesive tapes are being used to fix parts in various industrial fields of OA equipment, IT and home appliances, automobiles, and the like, temporarily fixing parts, labeling in order to display product information, and the like. In recent years, in view of protection of the global environment, in those various industrial fields of home appliances, automobiles, and the like, it has been highly required for use in products to be recycled or reused. In order to recycle or reuse various products, it is necessary to perform an operation of peeling the adhesive tape used to fix parts or labeling. However, since the adhesive tape is placed on various parts of the product, implementing a simple removal step to reduce operational costs is desired.

As an easily dismantlable adhesive tape, for example, there is a disclosure regarding an adhesive member having two or more adhesive layers having different degree of adhesive forces (see PTL 1). The adhesive tape is an adhesive member which is bonded to an object through a weak adhesive layer in the adhesive member including adhesive layers having a superimposed structure. In this way, the adhesive tape firmly fixes to the object and is easily dismantled using the weak adhesive layer as a peeling surface.

As another easily dismantlable adhesive composition, there is a disclosure regarding an adhesive composition containing aliphatic polyester (see PTL 2). According to the disclosure, when being dipped into warm water in a peeling operation, the composition can be easily peeled by hydrolysis-accelerating action of polycaprolactone.

Moreover, as an adhesive composition using an acrylic block copolymer, there is a disclosure regarding an adhesive composition containing a block copolymer which is obtained by producing an acrylic copolymer having a carboxyl precursor group (-COOt-butyl) in an acrylic polymer block and then substituting the carboxyl precursor group with a carboxyl group (see PTL 3). The adhesive composition has a step of producing an acrylic copolymer having a t-butyl group on the side chain, as the carboxyl precursor.

### Citation List

### Patent Literature

[PTL1] Japanese Unexamined Patent Application, First Publication No. H10-140093
[PTL 2] Japanese Unexamined Patent Application, First Publication No. H9-137145
[PTL 3] Japanese Unexamined Patent Application, First Publication No. 2002-167566

### Summary of Invention

### Technical Problem

However, the adhesive member disclosed in PTL 1 has a problem in that the production cost thereof becomes high since plural adhesive layers are required as essential constituents. Furthermore, since the member is adhered to an object through a weak adhesive layer, there is a limit on the amount of the adhesive force that can be achieved, and accordingly, it is difficult to use the adhesive member to firmly fix articles.

Moreover, when being peeled off, the adhesive composition disclosed in PTL 2 needs to be dipped in warm water. Therefore, when the size of a member to be dismantled is large, the cost of equipment increases, and the composition cannot be applied to parts for which water cannot be used, such as the case of reusing electronic parts.

In addition, regarding the adhesive composition disclosed in PTL 3, the t-butyl group does not remain in the obtained adhesive composition, and the composition does not have dismantlability. Furthermore, the acrylic copolymer having a t-butyl group merely has a random polymer block of n-butyl acrylate and t-butyl acrylate and cannot realize an easy dismantlability.

The present invention is for solving the above problems and providing an easily dismantlable adhesive tape, which can be suitably stuck to an object, can fix parts to each other, and can be easily dismantled by heating or energy ray irradiation even if water, such as warm water, is not used for the dismantlement, and an adhesive composition that can realize the easily dismantlable adhesive tape.

### Solution to Problem

The present invention provides the following (1) to (6).
(1) An easily dismantlable adhesive composition as an adhesive composition containing an acrylic polymer (X) that contains a (meth)acrylate monomer as a main monomer component, and an acid catalyst or an acid generator,
   in which the acrylic polymer (X) contains a poly(meth)acrylate chain (A) that is constituted with repeating units derived from a carboxyl precursor group-containing (meth)acrylate monomer (a), and in which the number of the repeating units is 10 or greater.
(2) The easily dismantlable adhesive composition according to Claim 1, in which the acrylic polymer (X) is an acrylic block polymer having the poly(meth)acrylate chain (A) that is formed of repeating units derived from the carboxyl precursor group-containing (meth)acrylate monomer (a) and a poly(meth)acrylate chain (B) that contains repeating units derived from another poly(meth)acrylate monomer (b), and the number of the repeating units constituting the poly(meth)acrylate chain (A) is 10 or greater.
(3) The easily dismantlable adhesive composition according to Claim 1 or 2, in which the carboxyl precursor group-containing (meth)acrylate monomer (a) is at least one kind selected from tert-butyl (meth)acrylate, 2-methyl-2-adamantyl (meth)acrylate, 2-ethyl-2-adamantyl (meth)acrylate, bornyl (meth)acrylate, isobornyl (meth)acrylate, cyclohexyl (meth)acrylate, and benzyl (meth)acrylate.
(4) The easily dismantlable adhesive composition according to Claim 2 or 3, in which the poly(meth)acrylate chain (B) contains at least one kind selected from 2-ethylhexyl (meth)acrylate and n-butyl (meth)acrylate as a main monomer component.
(5) The easily dismantlable adhesive composition according to any one of Claims 2 to 4, in which a ratio between the poly(meth)acrylate chain (A) and the poly(meth)acrylate chain (B) in the acrylic polymer is 75/25 to 20/80 in terms of a molar ratio of (A)/(B).
(6) An easily dismantlable adhesive tape having an adhesive layer formed of the adhesive composition according to any one of Claims 1 to 5.

When being stuck to an object, the adhesive layer formed of the adhesive composition having the above constitution exhibits adhesion properties caused by the acrylic polymer. Moreover, when the adhesive layer is dismantled, the carboxyl precursor group on the side chain of the polymer is decomposed by an acid generated by external stimulation such as heating or exposure to light, whereby the adhesive force can be greatly reduced, and the adhesive layer can be easily dismantled.

### Effects of Invention

According to the easily dismantlable adhesive composition of the present invention, adhesive properties of the acrylic polymer do not deteriorate, and the composition is easily dismantled without leaving an adhesive residue by simple means such as heat or light at the time of dismantlement. Accordingly, the composition can be suitably used to fix parts in various industrial fields of OA equipment, IT and home appliances, automobiles, and the like that can be recycled or reused, temporarily fixing parts, labeling for displaying product information, and the like, without particular limitation. Moreover, at the time of dismantlement, the composition can be easily dismantled by simple heating equipment, energy ray irradiation equipment, and the like.

### Brief Description of Drawings

FIG. 1 is a view showing 180° peel strengths (mN/20 mm width) and peel distances (mm) measured before and after heating in Example 1.
FIG. 2 is a view showing 180° peel strengths (mN/20 mm width) and peel distances (mm) measured before and after heating in Example 2.
FIG. 3 is a view showing 180° peel strengths (mN/20 mm width) and peel distances (mm) measured before and after heating in Example 3.
FIG. 4 is a view showing 180° peel strengths (mN) and peel distances (mm/20 mm width) measured before and after heating, measured after UV irradiation, and measured after UV irradiation and heating in Example 4.
FIG. 5 is a view showing 180° peel strengths (mN) and peel distances (mm/20 mm width) measured before and after heating, measured after UV irradiation, and measured after UV irradiation and heating in Example 5.
FIG. 6 is a view showing 180° peel strengths (mN) and peel distances (mm/20 mm width) measured before and after heating, measured after UV irradiation, and measured after UV irradiation and heating in Example 6.
FIG. 7 is a view showing 180° peel strengths (mN) and peel distances (mm/20 mm width) measured before and after heating, measured after UV irradiation, and measured after UV irradiation and heating in Example 7.
FIG. 8 is a view showing 180° peel strengths (mN) and peel distances (mm/20 mm width) measured before and after heating, measured after UV irradiation, and measured after UV irradiation and heating in Example 8.
FIG. 9 is a view showing 180° peel strengths (mN) and peel distances (mm/20 mm width) measured before and after heating, measured after UV irradiation, and measured after UV irradiation and heating in Example 9.
FIG. 10 is a view showing 180° peel strengths (mN) and peel distances (mm/20 mm width) measured before and after heating, measured after UV irradiation, and measured after UV irradiation and heating in Example 10.
FIG. 11 is a view showing 180° peel strengths (mN) and peel distances (mm/20 mm width) measured before and after heating, measured after UV irradiation, and measured after UV irradiation and heating in Example 11.
FIG. 12 is a view showing 180° peel strengths (mN/20 mm width) and peel distances (mm) measured before and after heating in Comparative example 1.

### Description of Embodiments

Hereinafter, preferable examples of the present invention will be described, but the present invention is not limited to these examples. The constituents may be added, omitted, or replaced, or modification may be made in other ways, within a range that does not departs from the gist of the present invention,

### [Acrylic polymer (X)]

The acrylic polymer (X) used in the easily dismantlable adhesive composition of the present invention contains a poly(meth)acrylate chain (A) constituted with repeating units derived from a carboxyl precursor group-containing (meth)acrylate monomer (a). The poly(meth)acrylate chain (A) is a poly(meth)acrylate chain in which at least 10 or more of the repeating units derived from the (meth)acrylate monomer (a) continue.

The carboxyl precursor group constituting a side chain of the poly(meth)acrylate chain (A) is converted into a carboxyl group by an acid catalyst or an acid component of an acid generator which generates an acid by light or heat from the outside of an adhesive layer, whereby the poly(meth)acrylate chain (A) becomes a poly(meth)acrylate chain. Since poly(meth)acrylate chain hardens the adhesive layer to reduce the adhesiveness of the adhesive layer, the side chain of the poly(meth)acrylate chain is decomposed by an acid component generated by external stimulation, whereby peeling properties of the adhesive layer are improved, and the adhesive layer can be easily dismantled.

The carboxyl precursor group is not particularly limited as long as it turns into a carboxyl group by an acid. However, ester groups, which are constituted with an alkyl group having a secondary or tertiary carbon atom that easily causes olefin elimination by an acid and a carboxyl group, can be preferably used. Moreover, as groups other than the alkyl group having a secondary or tertiary carbon atom, benzyl groups, which can be easily dissociated under mild conditions, and the like can be preferably used. Among the carboxyl precursor groups dissociated at the time of decomposition of the side chain, groups that generate gas such as alkylene or alkane by the dissociation are preferable since these groups contribute to the improvement of peeling properties of the adhesive layer and make it possible to obtain better removability.

The poly(meth)acrylate chain (A) is specifically a polymer chain represented by the following Formula (1).

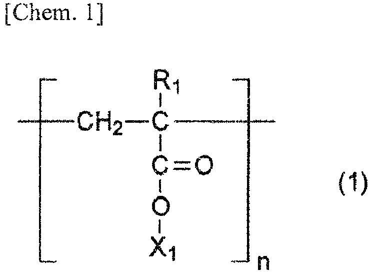

In Formula (1), R₁ is a hydrogen atom or a methyl group and preferably is a hydrogen atom.

X₁ is an alkyl group which is dissociated by the influence of an acid and can form a carboxyl group in Formula (1). When X₁ is an alkyl group having a secondary or tertiary carbon atom, an oxygen atom of a (meth)acryloyloxy group binds to the secondary or tertiary carbon atom of the alkyl group. The type of X₁ may be different in each repeating unit as long as X₁ is an alkyl group that can form a carboxyl group in Formula (1) by being dissociated. However, in terms of production, a structure in which the same repeating units continue is preferable. If n as a number of the repeating unit is 10 or greater, the side chain is decomposed by an acid catalyst or an acid component of an acid generator which generates an acid by light or heat from the outside of the adhesive layer, and this can contribute to peeling of the adhesive layer. n as a number of the repeating unit is a number of polymerizable repeating units and is not particularly limited as long as the number can realize adhesion properties. However, n is preferably 10 or greater and more preferably 20 or greater, and the upper limit thereof is preferably 100,000 or less.

Among the (meth)acrylate monomers (a) constituting the poly(meth)acrylate chain (A), as a (meth)acrylate monomer (a1-1) which is formed when a secondary carbon atom of the alkyl group having the secondary carbon atom binds to a (meth)acryloyloxy group, for example, sec-butyl (meth)acrylate, isopropyl (meth)acrylate, sec-hexyl (meth)acrylate, sec-octyl (meth)acrylate, sec-nonyl (meth)acrylate, sec-decyl (meth)acrylate, bornyl (meth)acrylate, isobornyl (meth)acrylate, and cyclohexyl (meth)acrylate can be used.

As a (meth)acrylate monomer (a1-2) which is formed when a tertiary carbon atom of the alkyl group having the tertiary carbon atom binds to a (meth)acryloyloxy group, for example, tert-butyl (meth)acrylate, tert-hexyl (meth)acrylate, tert-octyl (meth)acrylate, tert-nonyl (meth)acrylate, tert-decyl (meth)acrylate, and 2-alkyl-2-adamantyl (meth)acrylate such as 2-methyl-2-adamantyl (meth)acrylate can be used.

Moreover, as the carboxyl precursor group-containing (meth)acrylate monomer (a) other than the above, benzyl (meth)acrylate can also be preferably used.

Among these (meth)acrylate monomers (a), tert-butyl (meth)acrylate, 2-methyl-2-adamantyl (meth)acrylate, 2-ethyl-2-adamantyl (meth)acrylate, bornyl (meth)acrylate, isobornyl (meth)acrylate, cyclohexyl (meth)acrylate, and benzyl (meth)acrylate can be preferably used since these particularly suitably forms a. carboxyl group by an acid. Among these, tert-butyl acrylate can be particularly preferably used. Furthermore, isobornyl acrylate can be particularly preferably used since this monomer not only can suitably form a carboxyl group by an acid but also can improve the thermal stability of the adhesive layer.

The acrylic polymer (X) used in the present invention may be a polymer solely formed of the poly(meth)acrylate chain (A) consisting of the (meth)acrylate monomer (a), or may form a copolymer with another poly(meth)acrylate chain (B) other than the poly(meth)acrylate chain (A). Particularly, if the acrylic polymer (X) is formed into a block copolymer of the poly(meth)acrylate chain (A) and another poly(meth)acrylate chain (B), excellent adhesion performance and the like can be suitably imparted to the acrylic polymer (X). The block copolymer may be a block copolymer (an AB-type block copolymer) of one poly(meth)acrylate chain (A) and one poly(meth)acrylate chain (B), or a block copolymer (an ABA-type, a BAB-type, an ABAB-type, an ABABA-type, or the like) in which plural poly(meth)acrylate chains (A) are randomly block-polymerized with plural poly(meth)acrylate chains (B).

It is preferable that the poly(meth)acrylate chain (B) be constituted to have preferable adhesion properties according to the embodiment to be used, and the poly(meth)acrylate chain (B) containing repeating units derived from a (meth)acrylate monomer (b) other than the above (meth)acrylate monomer (a) can be used. As the poly(meth)acrylate chain (B), it is possible to use a poly (meth)acrylate chain which contains, as a main repeating unit, the (meth)acrylate monomer (b) other than the (meth)acrylate monomer (a) in an amount of 50% by mass or more and more preferably in an amount of 80% by mass or more in monomer components constituting the poly(meth)acrylate chain (B). Moreover, a polar group-containing vinyl monomer having a functional group such as a hydroxyl group, a carboxyl group, an amino group, or an imino group on a side chain may be used as a monomer component, concurrently with another (meth)acrylate monomer (b).

As the (meth)acrylate monomer (b) constituting the poly(meth)acrylate chain (B) other than the poly(meth)acrylate chain (A), for example, (meth)acrylate monomers containing an alkyl group having 1 to 14 carbon atoms can be preferably used. For example, methyl (meth)acrylate, ethyl (meth)acrylate, n-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-undecyl (meth)acrylate, n-dodecyl (meth)acrylate, n-tridecyl (meth)acrylate, and n-tetradecyl (meth)acrylate can be used. Among these, it is preferable to use n-buty (meth)acrylate or 2-ethylhexyl (meth)acrylate as a main monomer component, since the adhesiveness of the obtained adhesive layer is improved.

Further, hydroxyl group-containing vinyl monomers can be concurrently used with the (meth)acrylate monomer (b). For example, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 2-hydroxyhexyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate can be used.

Moreover, carboxyl group-containing vinyl monomers can be used. For example, carboxyl group-containing monomers such as acrylic acid, methacrylic acid, itaconic acid, maleic acid, crotonic acid, an acrylic acid dimer, and ethylene oxide-modified succinic acrylate can be used.

In addition, nitrogen group-containing vinyl monomers can also be used. For example, amide group-containing vinyl monomers such as acrylamide, methacrylamide, diethyl acrylamide, N-vinylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, N,N-dimethylaminopropylmethacrylamide, and diacetone acrylamide, and amino group-containing vinyl monomers such as aminoethyl (meth)acrylate, N,N-dimethylaminoethyl (meth)acrylate, and N,N-dimethylaminopropyl (meth)acrylatc can be used.

Furthermore, imino group-containing monomers can be used. For example, cyclohexyl maleimide, isopropyl maleimide, N-cyclohexyl maleimide, and itaconimide, can be used.

A number average molecular weight of the acrylic polymer (X) used in the present invention may be appropriately adjusted within a range of about 10,000 to 2,000,000 according to the embodiment used. When the acrylic polymer (X) is produced by a living radical polymerization method, which will be described later, in view of maintaining excellent production efficiency, the number average molecular weight is preferably adjusted to about 10,000 to 100,000. In view of maintaining excellent adhesive strength before dismantlement, it is preferable to adjust the number average molecular weight to about 150,000 to 1,000,000.

The number average molecular weight is a value measured by Gel Permeation Chromatography (GPC) and expressed in terms of standard polystyrene. For example, it can be measured under conditions of using HLC-8220GPC (manufactured by Tosoh Corporation), TSKgel GMHXL (manufactured by Tosoh Corporation) as a column, tetrahydrofuran as an eluent, and TSK standard polystyrene as standard polystyrene, at a column temperature of 40°C and a flow rate of 1.0 mL/min.

In order to adjust the molecular weight, a chain transfer agent may be used for polymerization. As the chain transfer agent, known chain transfer agents, such as, for example, lauryl mercaptan, glycidyl mercaptan, mercaptoacetic acid, 2-mercaptoethanol, thioglycolic acid, 2-ethylhexyl thioglycolate, and 2,3-dimethylcapto-1-propanol can be used.

When the acrylic polymer (X) is a copolymer of the poly(meth)acrylate chain (A) and the poly(meth)acrylate chain (B), the amount of (A) is preferably 75 mol% or less based on the total amount of (A) and (B). The copolymerization ratio is more preferably 75/25 to 20/80 and particularly preferably 65/35 to 20/80, in terms of a molar ratio of (A)/(B). If the block copolymerization ratio is within the above range, suitable dismantlability caused by the poly(meth)acrylate chain (A) and properties such as adhesion properties of the poly(meth)acrylate chain (B) can be suitably expressed.

The acrylic polymer (X) can be produced by, for example, causing a radical polymerization reaction of a mixture of the acrylic monomers described above. Specific examples of methods used to produce the acrylic polymer (X) include a living radical polymerization method and conventionally known radical polymerization methods performed using an azo-based initiator or a peroxide. Among these, it is preferable to use the living radical polymerization method, since this makes it possible to produce an acrylic polymer having narrow molecular weight distribution without causing a side reaction such as a chain transfer reaction or a cessation reaction in the process of radical polymerization.

Examples of the living radical polymerization method include an Atom Transfer Radical Polymerization method (ATRP method), a living radical polymerization method that uses organic tellurium as a growth terminal (TERP method), a living radical polymerization method performed using nitroxide (NMP method), a Reversible Addition Fragmentation chain Transfer method (RAFT method), and the like.

The Atom Transfer Radical Polymerization method (ATRP method) is a method of polymerizing the acrylic monomer in the presence of, for example, a transition metal complex and an organic halide.

As the transition metal constituting the transition metal complex, for example, Cu, Ru, Fe, Rh, V, Ni, or halides of these can be used. Moreover, examples of ligands coordinated to the transition metal include bipyridyl derivatives, mercaptan derivatives, trifluorate derivatives, tertiary alkylamine derivatives, and the like.

The organic halide is a polymerization initiator, and for example, methyl 2-bromo(or chloro)propionate, ethyl 2-bromo(or chloro)propionate, methyl 2-bromo(or chloro)-2-methyl propionate, ethyl 2-bromo(or chloro)-2-methyl propionate, 1-phenylethyl chloride (or bromide), 2-hydroxyethyl 2-bromo(or chloro)propionate, 4-hydroxybutyl 2-bromo(or chloro)propionate, 2-hydroxyethyl 2-bromo(or chloro)-2-methyl propionate, and 4-hydroxybutyl 2-bromo(or chloro)-2-methyl propionate can be used.

Moreover, the acrylic polymer (X) can be produced in the following manner for example. That is, the carboxyl precursor group-containing (meth)acrylate monomer (a) is polymerized by the radical polymerization method described above to produce the poly(meth)acrylate chain (A) formed of a homopolymer of the (meth)acrylate monomer (a) having the carboxyl precursor group, the poly(meth)acrylate chain (B) is then produced by the same method as described above, and the poly(meth)acrylate chains (A) and (B) are bonded to each other by means of a click reaction such as a cycloaddition reaction between an acetylene group and an azide group that have been introduced respectively into the (A) and (B).

### [Acid catalyst and acid generator]

As the acid catalyst used in the present invention, for example, an aromatic sulfonic acid such as p-toluenesulfonic acid or benzenesulfonic acid, an organic acid such as aliphatic sulfonic acid, an inorganic acid such as hydrochloric acid or sulfuric acid, and hydrates of these can be used.

The acid generator used in the present invention is, for example, a photo-acid generator generating an acid that can initiate cationic polymerization by being irradiated with light of energy rays such as UV rays, or a thermal acid generator generating an acid by heating and the like. Among these, the photo-acid generator can be preferably used since this makes it possible to suitably dismantle the adhesive layer by two types of external stimulation including light and heat, makes it difficult for the adhesive layer to be easily decomposed or dismantled when it is stored in the form of the adhesive composition or when the composition has fixed articles in the form of an adhesive tape, and makes it possible to stably maintain the storability or adhesion properties.

As the photo-acid generator, for example, N-hydroxynaphthalimide trifluoromethanesulfonic acid ester, N-hydroxynaphthalimide methanesulfonic acid ester, N-hydroxynaphthalimide benzenesulfonic acid ester, N-hydroxynaphthalimide triflate, bis(cyclohexylsulfonyl)diazomethane, bis(tert-butylsulfonyl)diazomethane, bis(p-toluenesulfonyl)diazomethane, triphenylsulfonium trifluoromethane sulfonate, diphenyl-4-methylphenyl sulfonium trifluoromethane sulfonate, diphenyl-2,4,6-trimethylphenylsulfonium-p-toluene sulfonate, bis(dodecylphenyl)iodonium hexafluoroantimonate, bis(tert-butylphenyl)iodonium hexafluorophosphate, bis(tert-butylphenyl)iodonium trifluoromethane sulfonate, triphenylsulfonium trifluoromethane sulfonate, biphenyliodonium trifluoromethane sulfonate, phenyl-(3-hydroxy-pentadecylphenyl)iodonium hexafluoroantimonate, and phenyl-(3-hydroxypentadecylphenyl)iodonium hexafluoroantimonate can be used.

These photo-acid generators may be appropriately selected according to the use thereof. For example, when being mixed with an adhesive, these photo-acid generators decrease the thermal decomposition temperature in some cases. Accordingly, among these, it is preferable to use a compound, which makes the thermal decomposition temperature become about 150°C or higher solely by the acid generator, such as N-hydroxynaphthalimide trifluoromethanesulfonic acid ester or bis(cyclohexylsulfonyl)diazomethane, since the compound prevents the adhesive composition from being dismantled due to an acid generated by the influence of heat at the time of storage and the like.

Moreover, among the photo-acid generators, a photo-acid generator generating gas by heating, such as bis(cyclohexylsulfonyl)diazomethane, is preferable since this compound easily realizes a particularly high degree of dismantlability by generating an acid by light or generating gas by heating. The photo-acid generator such as N-hydroxynaphthalimide trifluoromethanesulfonic acid ester that does not easily generate gas even being heated at about 100°C is preferable since an adhesive layer having a high degree of thermal stability can be obtained.

Further, among the photo-acid generators, photo-acid generators having a light-absorbing structure such as a benzene ring or naphthalene ring structure in the skeleton thereof are preferable since they can realize suitable dismantlability with a short light irradiation time or a small content thereof and can easily reduce the production cost or the cost of dismantlement. Meanwhile, these photo-acid generators not having a light-absorbing structure can be preferably used when a photo-acid generator is required to be stable with respect to light irradiation.

As the thermal acid generator, a sulfonium salt, a benzothiazonium salt, an ammonium salt, and a phosphonium salt can be used. For example, 4-acetoxyphenyldimethylsulfonium hexafluoroarsenate, benzyl-4-hydroxyphenylmethylsulfonium hexafluoroantimonate, 4-acetoxyphenylbenzylmethylsulfonium hexafluoroantimonate, dibenzyl-4-hydroxyphenylsulfonium hexafluoroantimonate, 4-acetoxyphenylbenzylsulfonium hexafluoroantimonate, and 3-benzylbenzothiazolium hexafluoroantimonate can be used.

### [Adhesive composition]

The adhesive composition of the present invention contains the acrylic copolymer (X) and an acid catalyst or an acid generator. Therefore, the obtained adhesive layer can sufficiently exhibit adhesion properties of the acrylic polymer when being stuck to an object. When being dismantled, the adhesive layer is heated or irradiated with light, in the presence of an acid catalyst or an acid generator which generates an acid by external stimulation such as heating or light, whereby the secondary or tertiary carbon atom having bound to a (meth)acryloyloxy group is decomposed. Accordingly, the adhesive force can be greatly reduced, and the adhesive layer can be easily dismantled.

The content of the acid catalyst or the acid generator in the adhesive composition may be appropriately adjusted according to the type of the acid generator to be used or the desired dismantlability. However, it is preferable to use the acid catalyst or the acid generator in an amount of 10 mol% or less, and particularly preferably in a range of 1 mol% to 10 mol%, based on 1 mol of the carboxyl precursor group contained in the carboxyl precursor group-containing (meth)acrylate (a). Particulary, in the case of the photo-acid generator, when a photo-acid generator having a light-absorbing structure is used, the content thereof is preferably about 0.1 mol% to 5 mol%, and particularly preferably 0.1 mol% to 3 mol%. On the other hand, when a photo-acid generator not having a light-absorbing structure is used, the content thereof is preferably about 3 mol% to 10 mol%, and particularly preferably 4 mol% to 8 mol%.

Regarding the content of the acid catalyst or the acid generator based on the acrylic polymer to be used, it is preferable to use acid catalyst or the acid generator in an amount of 15 parts by mass or less based on 100 parts by mass of the acrylic polymer (X). Particularly, in the case of the photo-acid generator, when a photo-acid generator having a light-absorbing structure is used, the amount thereof is preferably about 0.1 parts by weight to 5 parts by weight, and particularly preferably 0.2 parts by weight to 3 parts by weight. On the other hand, when a photo-acid generator not having a light-absorbing structure is used, the amount thereof is preferably about 5 parts by weight to 15 parts by weight, and particularly preferably 7 parts by weight to 12 parts by weight.

The adhesive composition of the present invention is an acrylic adhesive composition containing an acrylic polymer as a main constituent, and may be an adhesive composition containing only the acrylic polymer (X) as the acrylic polymer or an adhesive composition containing other acrylic polymers. Moreover, the composition may optionally contain an adhesiveness-imparting resin, a crosslinking agent, other additives, and the like.

### (Adhesiveness-imparting resin)

In the adhesive composition of the present invention, an adhesiveness-imparting resin for adjusting the strong adhesiveness of the obtained adhesive layer may be used. Examples of the adhesiveness-imparting resin used in the present invention include resins based on rosin, polymerized rosin, polymerized rosin ester, rosin phenol, stabilized rosin ester, disproportionated rosin ester, terpene, terpene phenol, petroleum, and the like.

### (Crosslinking agent)

In the adhesive composition of the present invention, it is preferable to use a crosslinking agent to improve a cohesive force of the obtained adhesive layer. As the crosslinking agent, known isocyanate-based crosslinking agents, epoxy-based crosslinking agents, aziridine-based crosslinking agents, polyvalent metal salt-based crosslinking agents, metal chelate-based crosslinking agents, keto-hydrazide-based crosslinking agents, oxazoline-based crosslinking agents, carbodimide-based crosslinking agents, silane-based crosslinking agents, glycidyl(alkoxy)epoxysilane-based crosslinking agents, and the like can be used.

### (Additives)

Known additives such as a base (aqueous ammonia or the like) or an acid for regulating pH, a foaming agent, a plasticizer, a softener, an antioxidant, a filler such as fiber, a balloon, or beads made of glass or plastic or metal powder, a colorant such as a pigment or a dye, a pH regulator, a film formation aid, a leveling agent, a thickener, a water repellent, and a defoaming agent can be optionally added to the adhesive composition of the present invention, within a range that does not diminish the desired effects of the present invention.

The above foaming agent can be used for promoting dismantlement of the adhesive, and for example, an inorganic foaming agent, an organic foaming agent, and thermally swellable and expandable hollow spheres that undergo volume expansion by heating can be used.

### [Easily dismantlable adhesive tape]

The easily dismantlable adhesive tape of the present invention is an adhesive tape having an adhesive layer formed of the adhesive composition described above. The adhesive layer may be a single-layered adhesive layer or may have a multi-layered structure consisting of plural adhesive layers and a sheet, just like a double-sided adhesive tape. To fix two or more members, a double-sided adhesive tape can be preferably used.

When a substrate is used for the easily dismantlable adhesive tape of the present invention, examples of the substrate include plastic films made of polyolefin (for example, polypropylene or polyethylene), polyester (for example, polyethylene terephthalate or polyethylene naphthalate), polystyrene, ABS, polycarbonate, a polyimide film, polyvinyl chloride, nylon, polyvinyl alcohol, and the like, non-woven cloth made of pulp, rayon, Manila hemp, acrylonitrile, nylon, polyester, and the like, paper, cloth, metal foil, and the like. In order to form a double-sided adhesive tape, a polyester film or non-woven cloth can be preferably used as the core, since this easily supports removability and adhesiveness at the same time.

Moreover, for the purpose of improving adhesiveness among the substrate, the core, and the adhesive layer, corona treatment, plasma treatment, anchor coating treatment, or the like may be performed on one side or both sides of the tape.

When the easily dismantlable adhesive tape of the present invention has a substrate, the tape can be produced by a direct coating method in which an adhesive solution is directly coated onto a substrate using a roll coater, a die coater, or the like, and then the resultant is subjected to a drying process and pasted to a separator, or by a transfer method in which an adhesive solution is coated onto a separator, and then the resultant is subjected to a drying process and transferred to a substrate. When the tape does not have a substrate, the tape can be produced by a method in which an adhesive solution is coated onto a separator, and then the resultant is pasted to another separator.

### (Method of dismantlement)

When being stuck to an object, the easily dismantlable adhesive tape of the present invention suitably adheres to the object or fixes parts to each other. Moreover, when being dismantled or peeled, the tape can be suitably peeled by external stimulation such as heat or light. The external stimulation such as heat or light may be appropriately adjusted according to the type of the acid generator used. However, it is preferable that the tape can be peeled under the condition of heat or light at such a temperature or intensity that is not caused when the tape is used in a usual way such as sticking.

When the easily dismantlable adhesive tape of the present invention contains an acid catalyst, a dissociation reaction of the carboxyl precursor group is accelerated by heating, and fluidity of the adhesive layer increases, whereby acids suitably diffuse into the adhesive layer, and the adhesive tape can be suitably dismantled. Moreover, when the tape contains an acid generator generating an acid by heat or light, an acid is generated by performing light irradiation or heating, whereby the adhesive tape can be suitably dismantled. However, if heating or the like is optionally further performed in the presence of the acid, the elimination reaction of the carboxyl precursor group is further accelerated, or diffusion of the acid is caused by the increase in fluidity of the adhesive layer, whereby the adhesive tape can be suitably dismantled. Particularly, in the present invention, it is preferable to efficiently dismantle the adhesive using an acid, by means of irradiating light such as UV rays using a photo-acid generator to generate the acid that can dismantle the adhesive and then performing heating.

The intensity of light such as UV rays may be equal to or higher than that of the energy by which the used photo-acid generator suitably generates an acid. Moreover, heating may be performed at a temperature equal to or higher than a temperature at which the used thermal acid generator suitably generates an acid. Further, the temperature of heating performed in the presence of an acid may be adjusted to a temperature which can increase fluidity of the adhesive layer based on a glass transition temperature of the adhesive and cause the acid to effectively diffuse, or a temperature which can accelerate an elimination reaction of the carboxyl precursor group and efficiently decompose the side chain.

The easily dismantlable adhesive tape of the present invention has removability by which the tape can be easily dismantled by external stimulation such as heat or light, when adhesion defectiveness is caused in a working process, or when members are separated from each other for recycling. Therefore, the easily dismantlable adhesive tape can be suitably used as an adhesive tape to fix parts of various products to each other, for industrial use including automobiles, building materials, OA, home appliance industry, and the like.

### Examples

The present invention will be described in more detail based on examples.

### (Example of ligand synthesis)

### <Synthesis of tris(2-(dimethylamino)ethyl)amine (hereinafter, abbreviated to "Me6TREN")>

17.5 ml of aqueous solution of 37% formaldehyde and 17 ml of formic acid were put in a reaction vessel and stirred for 1 hour at 0°C, and then a mixed solution containing 3.05 g of tris(2-aminoethyl)amine and 17.5 ml of pure water was added dropwise thereto, followed by reflux for 11 hours at 95°C.

After the reaction solution was cooled to room temperature, volatile components were evaporated under reduced pressure (45°C, 65 mmHg). A saturated aqueous sodium hydroxide solution was added to the residue to regulate the pH to be 10 or higher, and then the separated organic layer was extracted using dichloromethane (three times at 100 ml). The dichloromethane layer was dried over anhydrous sodium sulfate. After the anhydrous sodium sulfate was removed, dichloromethane was evaporated under reduced pressure to obtain a crude product. The crude product was then purified by being distilled under reduced pressure (100°C, 10 mmHg), thereby obtaining Me6TREN as a target product. The yield of Me6TREN was 43%.

### (Production example 1)

9.00 g of tert-butyl acrylate (hereinafter, abbreviated to "t-butyl acrylate), 77.5 µl of Me6TREN, 7.4 ml of toluene, and 3.5 ml of acetone were put in a Schlenk flask, a cycle consisting of freezing, deaeration, and melting was repeated three times to remove dissolved oxygen, and then argon purging was performed.

42.0 mg of copper bromide was added to the Schlenk flask, followed by stirring for 15 minutes, and 130.3 µl of methyl 2-bromopropionate as an initiator was added thereto to perform polymerization for 1 hour at 60°C.

The reaction rate of t-butyl acrylate was 50%. The reaction rate was obtained by measuring a 1H-NMR spectrum of the polymerized mixture and calculated from an integral ratio between residual monomers and produced polymers (the same method will be used in the following description). From the polymerized mixture, the catalyst was removed by column chromatography using acetone as a developing solvent and silica gel as a filler.

After acetone was evaporated under reduced pressure, the resultant was heated under reduced pressure for 24 hours at 40°C to remove residual monomers, thereby obtaining a macroinitiator (1). The macroinitiator (1) was poly-t-butyl acrylate having bromine atoms at a ω-terminal, and had a number average molecular weight [Mn] of 4,400, a weight average molecular weight [Mw] of 5,000 and a polydispersity [Mw/Mn] of 1.13. The molecular weight was measured by the GPC method described in the present specification (the same method will be used in the following description).

0.78 g of the macroinitiator (1), 3.57 g of 2-ethylhexyl acrylate, 25.7 µl of Me6TREN, and 1.45 g of ethyl acetate were put in a Schlenk flask, a cycle consisting of freezing, deaeration, and melting was repeated three times to remove dissolved oxygen, and then argon purging was performed.

13.9 mg of copper bromide was added to the Schlenk flask, followed by stirring for 15 minutes, and then polymerization was performed for 25 minutes at 60°C. The reaction rate of 2-ethylhexyl acrylate was 94%. From the polymerized mixture, the catalyst was removed by column chromatography using acetone as a developing solvent and silica gel as a filler. After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining a block copolymer (1) as an oily polymer.

The block copolymer (1) included a poly-t-butyl acrylate block and a poly-2-ethylhexyl acrylate block and had a number average molecular weight [Mn] of 18,600, a weight average molecular weight [Mw] of 22,800, and a polydispersity [Mw/Mn] of 1.23. As a result of measuring a 1H-NMR spectrum of the block copolymer (1) and calculating the degree of polymerization of the poly-t-butyl acrylate block and the poly-2-ethylhexyl acrylate block from an integral ratio, the following results were obtained.
Poly-t-butyl acrylate block: 30-mer
Poly-2-ethylhexyl acrylate block: 95-mer

### (Production example 2)

A macroinitiator (2) was obtained in the same manner as the macroinitiator (1) of Production example 1, except that polymerization was performed for 2 hours instead of 1 hour. The reaction rate of t-butyl acrylate was 97%. The macroinitiator (2) was poly-t-butyl acrylate having bromine atoms at a ω-terminal, and had a number average molecular weight [Mn] of 8,400, a weight average molecular weight [Mw] of 9,200, and a polydispersity [Mw/Mn] of 1.09.

0.80 g of the macroinitiator (2), 1.76 g of 2-ethylhexyl acrylate, 12.7 µl of Me6TREN, and 0.86 g of ethyl acetate were put into a Schlenk flask, a cycle consisting of freezing, deaeration, and melting was repeated three times to remove dissolved oxygen, and then argon purging was performed.

6.9 mg of copper bromide was added to the Schlenk flask, followed by stirring for 15 minutes, and then polymerization was performed for 18 minutes at 60°C. The reaction rate of 2-ethylhexyl acrylate was 71%. From the polymerized mixture, the catalyst was removed by column chromatography using acetone as a developing solvent and silica gel as a filler.

After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining a block copolymer (2) as an oily polymer.

The block copolymer (2) included a poly-t-butyl acrylate block and a poly-2-ethylhexyl acrylate block and had a number average molecular weight [Mn] of 20,000, a weight average molecular weight [Mw] of 24,100, and a polydispersity [Mw/Mn] of 1.21. As a result of measuring a 1H-NMR spectrum of the block copolymer (2) and calculating a degree of polymerization of the poly-t-butyl acrylate block and the poly-2-ethylhexyl acrylate block from an integral ratio, the following results were obtained.
Poly-t-butyl acrylate block: 61-mer
Poly-2-ethylhexyl acrylate block: 68-mer

### (Production example 3)

4.50 g of t-butyl acrylate, 25.3 µl of Me6TREN, 2.2 ml of toluene, and 3.2 ml of acetone were put in a Schlenk flask, a cycle consisting of freezing, deaeration, and melting was repeated three times to remove dissolved oxygen, and then argon purging was performed.

13.7 mg of copper bromide was added to the Schlenk flask, followed by stirring for 15 minutes, and then 35.5 µl of methyl 2-bromopropionate as an initiator was added thereto, followed by polymerization for 3.3 hours at 60°C. The reaction rate of t-butyl acrylate was 81 %. From the polymerized mixture, the catalyst was removed by column chromatography using acetone as a developing solvent and silica gel as a filler.

After acetone was evaporated under reduced pressure, the resultant was heated under reduced pressure for 24 hours at 40°C to remove residual monomers, thereby obtaining a macroinitiator (3). The macroinitiator (3) was poly-t-butyl acrylate having bromine atoms at a ω-terminal, and had a number average molecular weight [Mn] of 11,800, a weight average molecular weight [Mw] of 12,900, and a polydispersity [Mw/Mn] of 1.09.

1.42 g of the macroinitiator (3), 0.89 g of 2-ethylhexyl acrylate, 15.9 µl of Me6TREN, and 0.78 g of ethyl acetate were put in a Schlenk flask, a cycle consisting of freezing, deaeration, and melting was repeated three times to remove dissolved oxygen, and then argon purging was performed.

8.6 mg of copper bromide was added to the Schlenk flask, followed by stirring for 15 minutes, and then polymerization was performed for 15 minutes at 60°C. The reaction rate of 2-ethylhexyl acrylate was 84%. From the polymerized mixture, the catalyst was removed by column chromatography using acetone as a developing solvent and silica gel as a filler.

After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining a block copolymer (3) as an oily polymer. The block copolymer (3) included a poly-t-butyl acrylate block and a poly-2-ethylhexyl acrylate block and had a number average molecular weight [Mn] of 18,500, a weight average molecular weight [Mw] of 21,600, and a polydispersity [Mw/Mn] of 1.17. As a result of measuring a 1H-NMR spectrum of the block copolymer (3) and calculating a degree of polymerization of the poly-t-butyl acrylate block and the poly-2-ethylhexyl acrylate block from an integral ratio, the following results were obtained.
Poly-t-butyl acrylate block: 94-mer
Poly-2-ethylhexyl acrylate block: 36-mer

### (Production example 4)

1.28 g of the macroinitiator (2), 2.83 g of 2-ethylhexyl acrylate, 20.3 µl of Me6TREN, and 4.11 g of ethyl acetate were put in a Schlenk flask, a cycle consisting of freezing, deaeration, and melting was repeated three times to remove dissolved oxygen, and then argon purging was performed.

11.0 mg of copper bromide was added to the Schlenk flask, followed by stirring for 1.5 minutes, and then polymerization was performed for 2 hours at 60°C. The reaction rate of 2-ethylhexyl acrylate was 34%. From the polymerized mixture, the catalyst was removed by column chromatography using acetone as a developing solvent and silica gel as a filler. After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining a block copolymer (4) as an oily polymer. The block copolymer (4) included a poly-t-butyl acrylate block and a poly-2-ethylhexyl acrylate block and had a number average molecular weight [Mn] of 12,600, a weight average molecular weight [Mw] of 15,000, and a polydispersity [Mw/Mn] of 1.19. As a result of measuring a 1H-NMR spectrum of the block copolymer (4) and calculating a degree of polymerization of the poly-t-butyl acrylate block and the poly-2-ethylhexyl acrylate block from an integral ratio, the following results were obtained.
Poly-t-butyl acrylate block: 61-mer
Poly-2-ethylhexyl acrylate block: 34-mer

### (Production example 5)

1.51 g of the macroinitiator (3), 1.49 g of 2-ethylhexyl acrylate, 16.9 µl of Me6TREN, and 1.46 g of ethyl acetate were put in a Schlenk flask, a cycle consisting of freezing, deaeration, and melting was repeated three times to remove dissolved oxygen, and then argon purging was performed.

9.2 mg of copper bromide was added to the Schlenk flask, followed by stirring for 15 minutes, and then polymerization was performed for 0.5 hours at 60°C. The reaction rate of 2-ethylhexyl acrylate was 75%. From the polymerized mixture, the catalyst was removed by column chromatography using acetone as a developing solvent and silica gel as a filler. After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining a block copolymer (5) as an oily polymer. The block copolymer (5) included a poly-t-butyl acrylate block and a poly-2-ethylhexyl acrylate block and had a number average molecular weight [Mn] of 19,500, a weight average molecular weight [Mw] of 23,200, and a polydispersity [Mw/Mn] of 1.19. As a result of measuring a 1H-NMR spectrum of the block copolymer (5) and calculating a degree of polymerization of the poly-t-butyl acrylate block and the poly-2-ethylhexyl acrylate block from an integral ratio, the following results were obtained.
Poly-t-butyl acrylate block: 94-mer
Poly-2-ethylhexyl acrylate block: 50-mer

### (Production example 6)

4.11 g oft-butyl acrylate, 43.8 µl of Me6TREN, 3.3 ml of toluene, and 1.6 ml of acetone were put in a Schlenk flask, a cycle consisting of freezing, deaeration, and melting was repeated three times to remove dissolved oxygen, and then argon purging was performed.

23.0 mg of copper bromide was added to the Schlenk flask, followed by stirring for 15 minutes, and 36.8 µl of methyl 2-bromopropionate as an initiator was added thereto to perform polymerization for 1 hour at 60°C. The reaction rate of t-butyl acrylate was 48%. From the polymerized mixture, the catalyst was removed by column chromatography using acetone as a developing solvent and silica gel as a filler.

After acetone was evaporated under reduced pressure, the resultant was heated under reduced pressure for 24 hours at 40°C to remove residual monomers, thereby obtaining a macroinitiator (4). The macroinitiator (4) was poly-t-butyl acrylate having bromine atoms at a ω-terminal, and had a number average molecular weight [Mn] of 6,200, a weight average molecular weight [Mw] of 6,800, and a polydispersity [Mw/Mn] of 1.10.

1.20 g of the macroinitiator (4), 1.28 g of 2-ethylhexyl acrylate, 33.2 µl of Me6TREN, and 0.50 g of ethyl acetate were put in a Schlenk flask, a cycle consisting of freezing, deaeration, and melting was repeated to remove dissolved oxygen, and then argon purging was performed.

12.5 mg of copper bromide was added to the Schlenk flask, followed by stirring for 15 minutes, and then polymerization was performed for 31 minutes at 60°C. The reaction rate of 2-ethylhexyl acrylate was 89%. From the polymerized mixture, the catalyst was removed by column chromatography using acetone as a developing solvent and silica gel as a filler. After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining a block copolymer (6) as an oily polymer.

The block copolymer (6) included a poly-t-butyl acrylate block and a poly-2-ethylhexyl acrylate block and had a number average molecular weight [Mn] of 11,300, a weight average molecular weight [Mw] of 15,100, and a polydispersity [Mw/Mn] of 1.34. As a result of measuring a 1H-NMR spectrum of the block copolymer (6) and calculating a degree of polymerization of the poly-t-butyl acrylate block and the poly-2-ethylhexyl acrylate block from an integral ratio, the following results were obtained.
Poly-t-butyl acrylate block: 53-mer
Poly-2-ethylhexyl acrylate block: 39-mer

### (Production example 7)

3.12 g of 2-ethylhexyl acrylate, 58.3 µl of Me6TREN, and 3.27 g of ethyl acetate were put in a Schlenk flask, a cycle consisting of freezing, deaeration, and melting was repeated three times to remove dissolved oxygen, and then argon purging was performed.

30.4 mg of copper bromide was added to the Schlenk flask, followed by stirring for 15 minutes, and 95.0 µl of dimethyl 2,6-dibromoheptanedioate as an initiator was added thereto to perform polymerization for 10 minutes at 60°C. The reaction rate of 2-ethylhexyl acrylate was 86%. From the polymerized mixture, the catalyst was removed by column chromatography using acetone as a developing solvent and silica gel as a filler.

After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining a bifunctional macroinitiator (5) as an oily polymer. The bifunctional macroinitiator (5) was poly-2-ethylhexyl acrylate having bromine atoms at both terminals, and had a number average molecular weight [Mn] of 6,000, a weight average molecular weight [Mw] of 7,000, and a polydispersity [Mw/Mn] of 1.16.

0.52 g of the bifunctional macroinitiator (5), 0.68 g oft-butyl acrylate, 23.6 µl of Me6TREN, and 0.40 g of ethyl acetate were put in a Schlenk flask, a cycle consisting of freezing, deaeration, and melting was repeated to remove dissolved oxygen, and then argon purging was performed.

8.7 mg of copper bromide was added to the Schlenk flask, followed by stirring for 15 minutes, and then polymerization was performed for 17 minutes at 60°C. The reaction rate of t-butyl acrylate was 97%. From the polymerized mixture, the catalyst was removed by column chromatography using acetone as a developing solvent and silica gel as a filler.

After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining an ABA-type triblock copolymer (7) as an oily polymer.

The ABA-type triblock copolymer (7) included a poly-t-butyl acrylate block as an A block and a poly-2-ethylhexyl acrylate block as a B block and had a number average molecular weight [Mn] of 12,800, a weight average molecular weight [Mw] of 15,800, and a polydispersity [Mw/Mn] of 1.23. As a result of measuring a 1H-NMR spectrum of the ABA-type triblock copolymer (7) and calculating the degree of polymerization of the poly-t-butyl acrylate block and the poly-2-ethylhexyl acrylate block from an integral ratio, the following results were obtained.
Poly-t-butyl acrylate block: 54-mer
Poly-2-ethylhexyl acrylate block: 33-mer

### (Production example 8)

3.08 g of 2-ethylhexyl acrylate, 52.1 µl of Me6TREN, and 3.12 g of ethyl acetate were put in a Schlenk flask, a cycle consisting of freezing, deaeration, and melting was repeated three times to remove dissolved oxygen, and then argon purging was performed.

17.1 mg of copper bromide was added to the Schlenk flask, followed by stirring for 15 minutes, and 27.4 µl of methyl 2-bromopropionate as an initiator was added thereto to perform polymerization for 32 minutes at 60°C. The reaction rate of 2-ethylhexyl acrylate was 73%. From the polymerized mixture, the catalyst was removed by column chromatography using acetone as a developing solvent and silica gel as a filler.

After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining a macroinitiator (6). The macroinitiator (6) was poly-2-ethylhexyl acrylate having bromine atoms at a ω-terminal, and had a number average molecular weight [Mn] of 9,300, a weight average molecular weight [Mw] of 11,000, and a polydispersity [Mw/Mn] of 1.19.

1.14 g of the macroinitiator (6), 0.89 g of isobornyl acrylate, 17.5 µl of Me6TREN, and 0.41 g of ethyl acetate were put in a Schlenk flask, a cycle consisting of freezing, deaeration, and melting was repeated to remove dissolved oxygen, and then argon purging was performed.

9.2 mg of copper bromide was added to the Schlenk flask, followed by stirring for 15 minutes, and then polymerization was performed for 64 minutes at 60°C. The reaction rate of isobornyl acrylate was 76%. From the polymerized mixture, the catalyst was removed by column chromatography using chloroform as a developing solvent and silica gel as a filler. After chloroform was evaporated under reduced pressure, the resultant was diluted with chloroform by an amount of about 5% by weight. The chloroform solution was poured into a mixed solvent of methanol and water (volume fraction of methanol/water = 80/20) that had an amount 20 times larger than that of the chloroform solution so as to precipitate the polymer and separate the polymer by decantation. The precipitate was heated under reduced pressure for 12 hours at 40°C, thereby obtaining a block copolymer (8) as an oily polymer.

The block copolymer (8) included a poly-2-ethylhexyl acrylate block and a polyisobornyl acrylate block, and had a number average molecular weight [Mn] of 14,800, a weight average molecular weight [Mw] of 19,100, and a polydispersity [Mw/Mn] of 1.29. As a result of measuring a 1H-NMR spectrum of block copolymer (8) and calculating a degree of polymerization of the polyisobornyl acrylate block and the poly-2-ethylhexyl acrylate block from an integral ratio, the following results were obtained.
Polyisobornyl acrylate: 29-mer
Poly-2-ethylhexyl acrylate block: 57-mer

### (Production example 9)

4.98 g of t-butyl acrylate, 74.3 µl of methyl 2-bromopropionate as an initiator, 53.5 µl of Me6TREN, 3.5 g of toluene, and 1.5 g of acetone were put in a Schlenk flask, a cycle consisting of freezing, deaeration, and melting was repeated three times to remove dissolved oxygen, and then argon purging was performed.

27.9 mg of copper bromide was added to the Schlenk flask, followed by stirring for 10 minutes, and then polymerization was performed for 1 hour at 60°C. The reaction rate of t-butyl acrylate was 54%. From the polymerized mixture, the catalyst was removed by column chromatography using chloroform as a developing solvent and silica gel as a filler.

After chloroform was evaporated under reduced pressure, the resultant was diluted with chloroform by an amount of about 10% by weight. The chloroform solution was poured into a mixed solvent of methanol and water (volume fraction of methanol/water = 80/20) that had an amount 20 times larger than that of the chloroform solution so as to precipitate the polymer and separate the polymer by decantation. The precipitate was heated under reduced pressure for 12 hours at 40°C, thereby obtaining a macroinitiator (7). The macroinitiator (7) was poly-t-butyl acrylate having bromine atoms at a ω-terminal, and had a number average molecular weight [Mn] of 5,800, the weight average molecular weight [Mw] of 6,600, and a polydispersity [Mw/Mn] of 1.14.

0.92 mg of copper bromide, 5.32 µl of Me6TREN, and 0.95 g of anisole were put in a sample tube, followed by stirring for 10 minutes, thereby obtaining a solution (1). 0.95 g of the solution (1), 0.66 g of the macroinitiator (7), 1.24 g of n-butyl acrylate, and 87.7 µl of tin (II) 2-ethyl hexanoate as a reductant were added to the Schlenk flask. In order to remove dissolved oxygen, a cycle consisting of freezing, deaeration, and melting was repeated three times, followed by argon purging, and then polymerization was performed for 120 minutes at 60°C. The reaction rate of n-butyl acrylate was 42%. From the polymerized mixture, the catalyst was removed by column chromatography using chloroform as a developing solvent and neutral alumina as a filler. After chloroform was evaporated under reduced pressure, the resultant was diluted with chloroform by an amount of about 10% by weight.

The chloroform solution was poured into a mixed solvent of methanol and water (volume fraction of methanol/water = 80/20) that had an amount 20 times larger than that of the chloroform solution so as to precipitate the polymer and separate the polymer by decantation. The precipitate was heated under reduced pressure for 12 hours at 40°C, thereby obtaining a block copolymer (9).

The block copolymer (9) included a poly-t-butyl acrylate block and a poly-n-butyl acrylate block, and had a number average molecular weight [Mn] of 8,500, a weight average molecular weight [Mw] of 9,900, and a polydispersity [Mw/Mn] of 1.17. As a result of measuring a 1H-NMR spectrum of the block copolymer (9) and calculating a degree of polymerization of the poly-t-butyl acrylate block and the poly-n-butyl acrylate block from an integral ratio, the following results were obtained.
Poly-t-butyl acrylate block: 36-mer
Poly-n-butyl acrylate block: 27-mer

### (Comparative production example 1)

1.53 g of t-butyl acrylate, 2.20 g of 2-ethylhexyl acrylate, 19.0 µl of Me6TREN, and 1.26 g of ethyl acetate were put in a Schlenk flask, a cycle consisting of freezing, deaeration, and melting was repeated three times to remove dissolved oxygen, and then argon purging was performed.

17.1 mg of copper bromide was added to the Schlenk flask, followed by stirring for 15 minutes, and then 19.0 µl of methyl 2-bromopropionate as an initiator was added thereto to perform polymerization for 16 minutes at 60°C. The reaction rate of t-butyl acrylate was 89%, and the reaction rate of 2-ethylhexyl acrylate was 88%

From the polymerized mixture, the catalyst was removed by column chromatography using acetone as a developing solvent and silica gel as a filler.

After acetone was evaporated under reduced pressure, the resultant was diluted with acetone by an amount of about 10% by weight. The acetone solution was poured into a mixed solvent of methanol and water (volume fraction of methanol/water = 80/20) that had an amount 20 times larger than that of the acetone solution so as to precipitate the polymer and separate the polymer by decantation. The precipitate was heated under reduced pressure for 12 hours at 40°C, thereby obtaining a random copolymer (1) as an oily polymer. The random copolymer (1) had a number average molecular weight [Mn] of 19,800, a weight average molecular weight [Mw] of 21,600, and a polydispersity [Mw/Mn] of 1.09. As a result of measuring a 1 H-NMR spectrum of the random copolymer (1) and calculating the composition of the copolymer from an integral ratio, the following results were obtained.
t-Butyl acrylate unit: 64 units
2-Ethylhexyl acrylate unit: 64 units

### (Example 1)

A p-toluenesulfonic acid monohydrate (TS; 5 mol% based on t-butyl groups in the block copolymer (1)) as an acid catalyst was added to the block copolymer (1), and the mixture was diluted with acetone, thereby obtaining an adhesive composition including 30% by weight of an acetone solution.

The adhesive composition was coated onto a PET film having a thickness of 50 µm using an applicator with a gap of 10 milli-inches, and the film was dried under reduced pressure for 12 hours to form an adhesive sheet. The adhesive sheet was cut in the form of short strips having a width of 20 mm and a length of 175 mm, and bonded onto an SUS plate having a width of 50 mm, a length of 150 mm, and a thickness of 0.5 mm by being pressed with a hand roller weighing 2 kg that reciprocated once, thereby obtaining two test pieces.

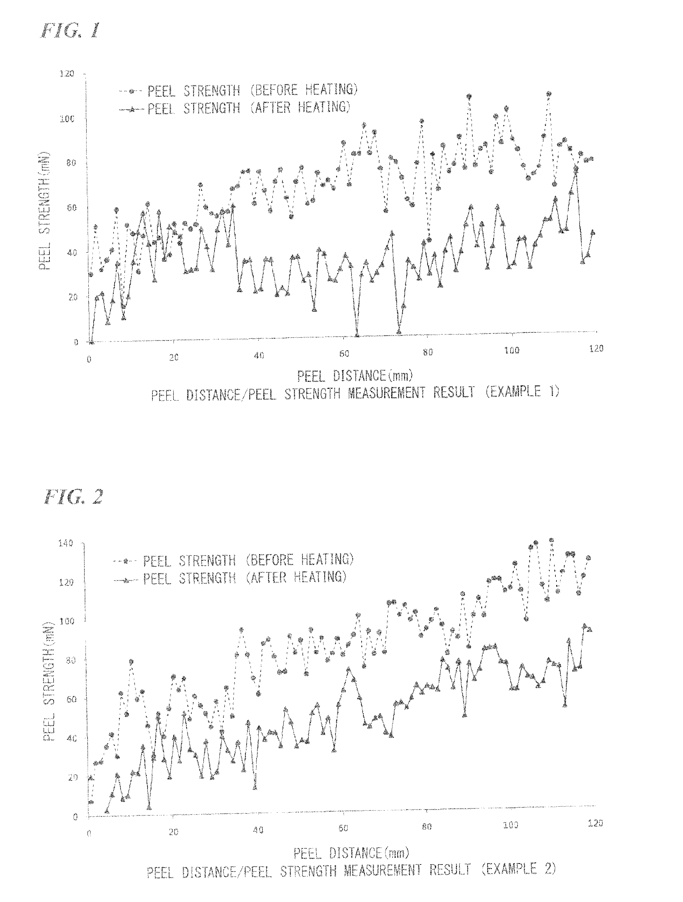

One of the test pieces, which have been bonded by pressure, was allowed to standstill for 20 minutes at room temperature, and peeled off using a tensile tester at a rate of 30 mm/min to measure a 180° peel strength. The 180" peel strength was measured at room temperature (the measurement was performed under the same conditions in the following examples and comparative example). The other test piece, which has been bonded by pressure, was heated for 1 hour at 100°C and left to cool to room temperature, and peeled off using a tensile tester at a rate of 30 mm/min to measure a 180° peel strength. The obtained results are shown in Table 1 and FIG. 1.

For UV irradiation, a mercury lamp "SHL-100UVQ-2" (75 W) for physics and chemistry from Toshiba, Inc. was used as a light source, the distance between the light source and the sample was set to 10 cm, and from a point in time when the time elapsing after lightening of the lamp became not shorter than 15 minutes, irradiation was performed on the sample (irradiation was performed under the same conditions in the following examples and comparative example).

### (Example 2)

An adhesive composition was obtained in the same manner as in Example 1, except that the block copolymer (2) was used instead of the block copolymer (1). The 180° peel strength of the obtained adhesive composition was measured in the same manner as in Example 1. The obtained results are shown in Table 1 and FIG. 2.

### (Example 3)

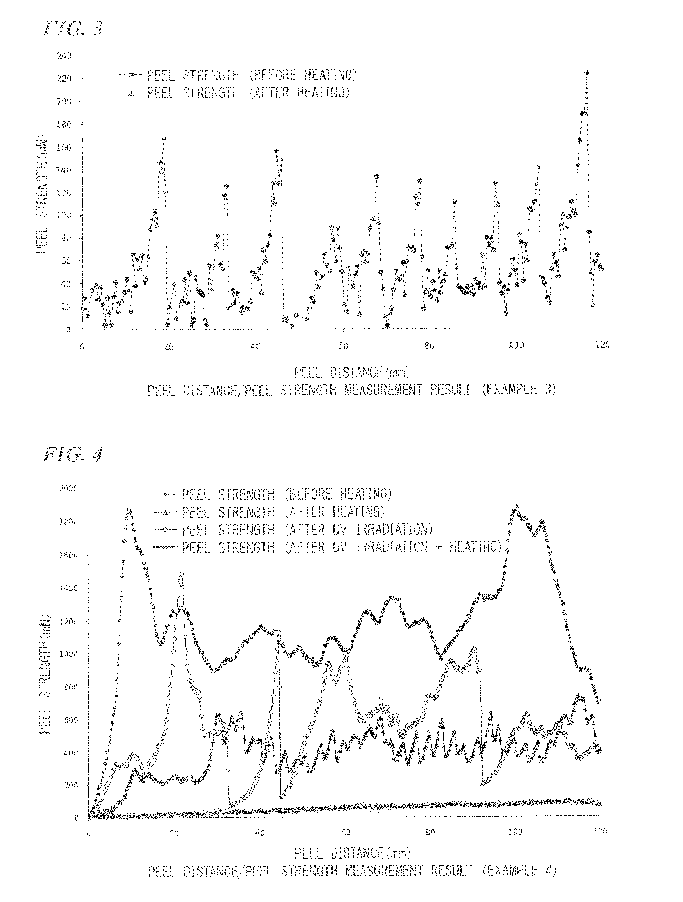

An adhesive composition was obtained in the same manner as in Example 1, except that the block copolymer (3) was used instead of the block copolymer (1). The 180° peel strength of the obtained adhesive composition was measured in the same manner as in Example 1. The obtained results are shown in Table 1 and FIG. 3.

### (Example 4)

Bis(cyclohexylsulfonyl)diazomethane (BCD; 7 mol% based on t-butyl groups in the block copolymer (4)) as a photo-acid generator was added to the block copolymer (4), and the mixture was diluted with acetone, thereby obtaining an adhesive composition including 30% by weight of an acetone solution.

The adhesive composition was coated onto a PET film having a thickness of 50 µm using an applicator with a gap of 10 milli-inches, and the film was dried under reduced pressure for 12 hours to form an adhesive sheet. The adhesive sheet was cut in the form of short strips having a width of 20 mm and a length of 175 mm, and bonded onto an SUS plate having a width of 50 mm, a length of 150 mm, and a thickness of 0.5 mm by being pressed with a hand roller weighing 2 kg that reciprocated once, thereby obtaining four test pieces.

One of the test pieces, which have been bonded by pressure, was allowed to standstill for 20 minutes at room temperature, and then peeled off using a tensile tester at a rate of 30 mm/min to measure a 180° peel strength. One of the test pieces, which have been bonded by pressure, was heated for 1 hour at 100°C and left to cool to room temperature. One of the test pieces, which have been bonded by pressure, was irradiated with UV rays for 24 hours at room temperature. One of the test pieces, which have been bonded by pressure, was irradiated with UV rays for 24 hours at room temperature, then heated for 1 hour at 100°C, and left to cool to room temperature. These test pieces were peeled off using a tensile tester at a rate of 30 mm/min to measure the 180° peel strength. The obtained results are shown in Table 1 and FIG. 4.

### (Example 5)

N-hydroxynaphthalimide triflate (NIT; 1 mol% based on t-butyl groups in the block copolymer (5)) as a photo-acid generator was added to the block copolymer (5), and the mixture was diluted with acetone, thereby obtaining an adhesive composition including 30% by weight of an acetone solution.

The adhesive composition was coated onto a PET film having a thickness of 50 µm using an applicator with a gap of 4 milli-inches, and the film was dried under reduced pressure for 12 hours to form an adhesive sheet.

The adhesive sheet was cut in the form of short strips having a width of 20 mm and a length of 175 mm, and bonded onto an SUS plate having a width of 50 mm, a length of 150 mm, and a thickness of 0.5 mm by being pressed with a hand roller weighing 2 kg that reciprocated once, thereby obtaining four test pieces.

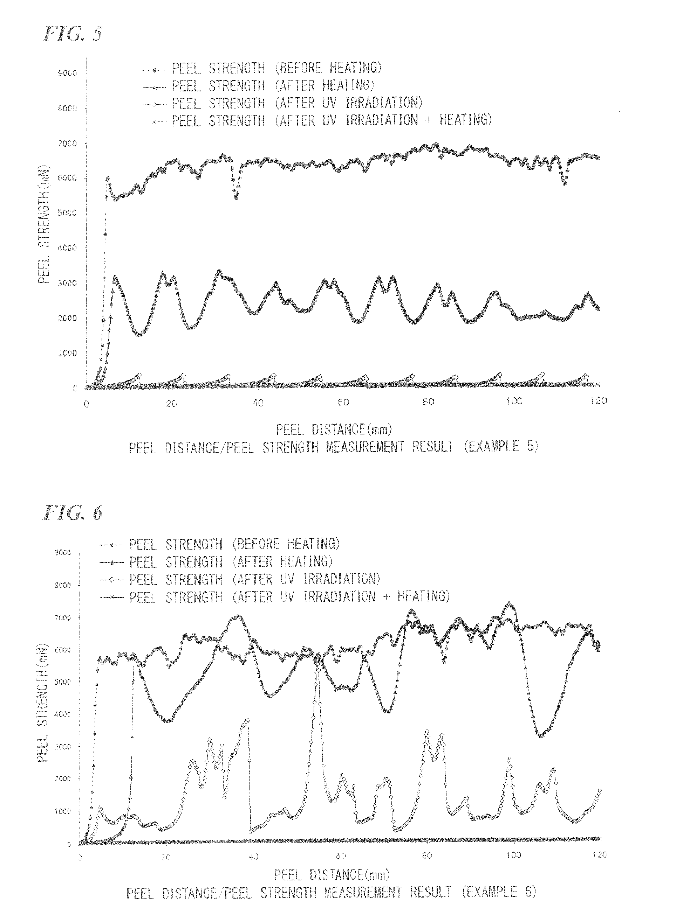

One of the test pieces, which have been bonded by pressure, was allowed to standstill for 20 minutes at room temperature, and then peeled off using a tensile tester at a rate of 30 mm/min to measure a 180° peel strength. One of the test pieces, which have been bonded by pressure, was heated for 1 hour at 100°C and then left to cool to room temperature. One of the test pieces, which have been bonded by pressure, was irradiated with UV rays for 2 hours at room temperature. One of the test pieces, which have been bonded by pressure, was irradiated with UV rays for 2 hours at room temperature, then heated for 1 hour at 100°C, and left to cool to room temperature. These test pieces were peeled off using a tensile tester at a rate of 30 mm/min to measure the 180° peel strength. The obtained results are shown in Table 1 and FIG. 5.

### (Example 6)

Bis(cyclohexylsulfonyl)diazomethane (5 mol% based on t-butyl groups in the block copolymer (5)) as a photo-acid generator was added to the block copolymer (5), and the mixture was diluted with acetone, thereby obtaining an adhesive composition including 30% by weight of an acetone solution.

The adhesive composition was coated onto a PET film having a thickness of 50 µm using an applicator with a gap of 4 milli-inches, and the film was dried under reduced pressure for 12 hours to form an adhesive sheet.

The adhesive sheet was cut in the form of short strips having a width of 20 mm and a length of 175 mm, and bonded onto an SUS plate having a width of 50 mm, a length of 150 mm, and a thickness of 0.5 mm by being pressed with a hand roller weighing 2 kg that reciprocated once, thereby obtaining four test pieces.

One of the test pieces, which have been bonded by pressure, was allowed to standstill for 1 to 2 hours at room temperature, and then peeled off using a tensile tester at a rate of 30 mm/min to measure a 180° peel strength. One of the test pieces, which have been bonded by pressure, was allowed to stand still for 30 minutes at room temperature, followed by heating for 1 hour at 100°C, and then left (for about 30 minutes) to cool to room temperature. One of the test pieces, which have been bonded by pressure, was allowed to standstill for 30 minutes at room temperature, followed by UV irradiation for 8 hours at room temperature, and then allowed to standstill for another 30 minutes. One of the test pieces, which was bonded by pressure, was allowed to standstill for 30 minutes at room temperature, followed by UV irradiation for 8 hours at room temperature, heated for 1 hour at 100°C, and then left (for about 30 minutes) to cool to room temperature. These test pieces were peeled off using a tensile tester at a rate of 30 mm/min to measure the 180° peel strength. The obtained results are shown in Table 1 and FIG. 6.

### (Example 7)

Bis(cyclohexylsulfonyl)diazomethane (7 mol% based on t-butyl groups in the block copolymer (5)) as a photo-acid generator was added to the block copolymer (5), and the mixture was diluted with acetone, thereby obtaining an adhesive composition including 30% by weight of an acetone solution.

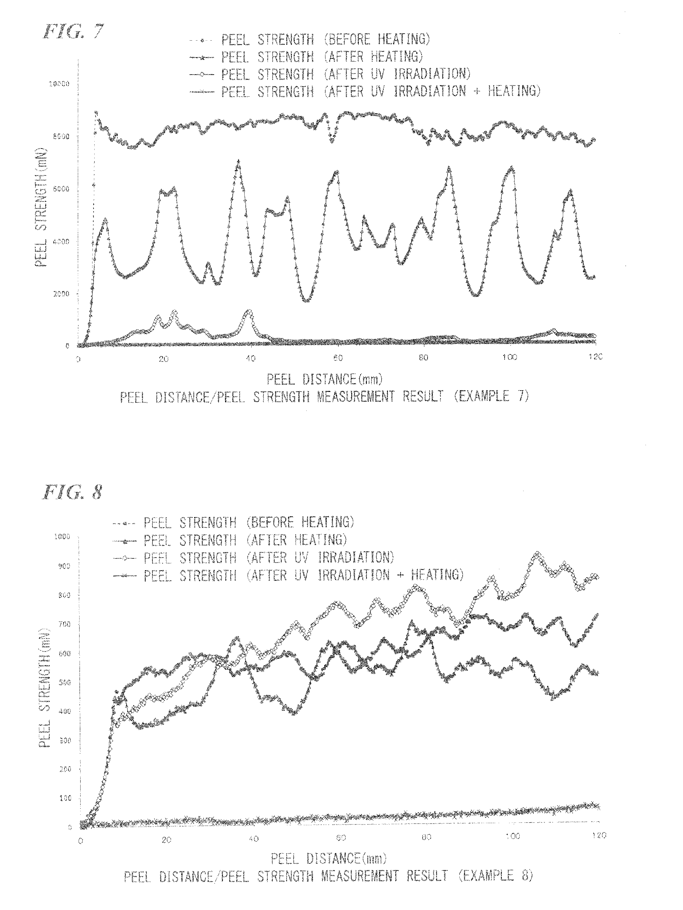

The 180° peel strength of the obtained adhesive composition was measured in the same manner as in Example 6, except that all of the test pieces were irradiated with UV rays for 24 hours instead of 8 hours. The obtained results are shown in Table 1 and FIG. 7.

### (Example 8)

N-hydroxyphthalimide triflate (0.2 mol% based on t-butyl groups in the block copolymer (6)) as a photo-acid generator was added to the block copolymer (6), and the mixture was diluted with acetone, thereby obtaining an adhesive composition including 30% by weight of an acetone solution.

The 180° peel strength of the obtained adhesive composition was measured in the same manner as in Example 6, except that all of the test pieces were irradiated with UV rays for 1 hour instead of 8 hours. The obtained results are shown in Table 1 and FIG. 8.

### (Example 9)

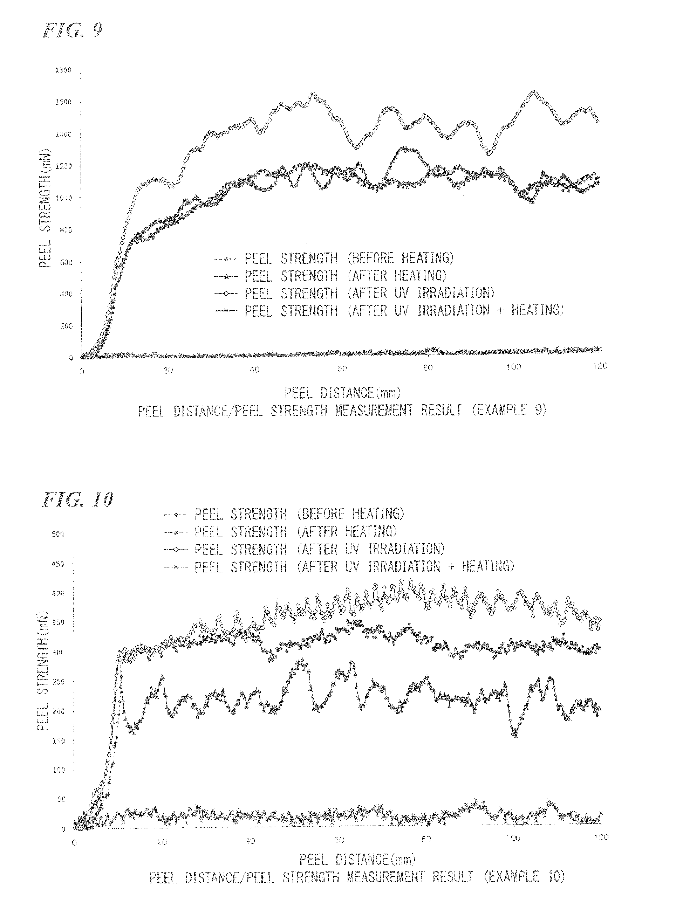

The 180° peel strength was measured in the same manner as in Example 8, except that the ABA-type triblock copolymer (7) was used instead of the block copolymer (6). The obtained results are shown in Table 1 and FIG. 9.

### (Example 10)

N-hydroxynaphthalimide triftate (0.5 mol% based on isobornyl groups in the block copolymer (8)) as a photo-acid generator was added to the block copolymer (8), and the mixture was diluted with toluene, thereby obtaining an adhesive composition including 30% by weight of an toluene solution. The adhesive composition was coated onto a PET film having a thickness of 50 µm using an applicator with a gap of 4 milli-inches, and the film was dried under reduced pressure for 12 hours to form an adhesive sheet. The adhesive sheet was cut in the form of short strips having a width of 20 mm and a length of 175 mm, and bonded onto an SUS plate having a width of 50 mm, a length of 150 mm, and a thickness of 0.5 mm by being pressed with a hand roller weighing 2 kg that reciprocated once, thereby obtaining four test pieces.

One of the test pieces, which have been bonded by pressure, was allowed to standstill for 1 to 2 hours at room temperature, and then peeled off using a tensile tester at a rate of 30 mm/min to measure a 180° peel strength. One of the test pieces, which was bonded by pressure, was allowed to stand still for 30 minutes at room temperature, followed by heating for 1 hour at 150°C, and then left (for about 30 minutes) to cool to room temperature. One of the test pieces, which was bonded by pressure, was allowed to standstill for 30 minutes at room temperature, followed by UV irradiation for 1 hour at room temperature, and then allowed to standstill for another 30 minutes. One of the test pieces, which have been bonded by pressure, was allowed to standstill for 30 minutes at room temperature, followed by UV irradiation for 1 hour at room temperature, then heated for 1 hour at 150°C, and left (for about 30 minutes) to cool to room temperature. These test pieces were peeled off using a tensile tester at a rate of 30 mm/min to measure the 180° peel strength. The obtained results are shown in Table 1 and FIG. 10.

### (Example 11)

N-hydroxynaphthalimide triflate (0.3 mol% based on t-butyl groups in the block copolymer (9)) as a photo-acid generator was added to the block copolymer (9), and the mixture was diluted with toluene, thereby obtaining an adhesive composition including 30% by weight of an toluene solution. The adhesive composition was coated onto a PET film having a thickness of 50 µm using an applicator with a gap of 4 mini-inches, and the film was dried under reduced pressure for 12 hours to form an adhesive sheet. The adhesive sheet was cut in the form of short strips having a width of 20 mm and a length of 175 mm, and bonded onto an SUS plate having a width of 50 mm, a length of 150 mm, and a thickness of 0.5 mm by being pressed with a hand roller weighing 2 kg that reciprocated twice, thereby obtaining four test pieces.

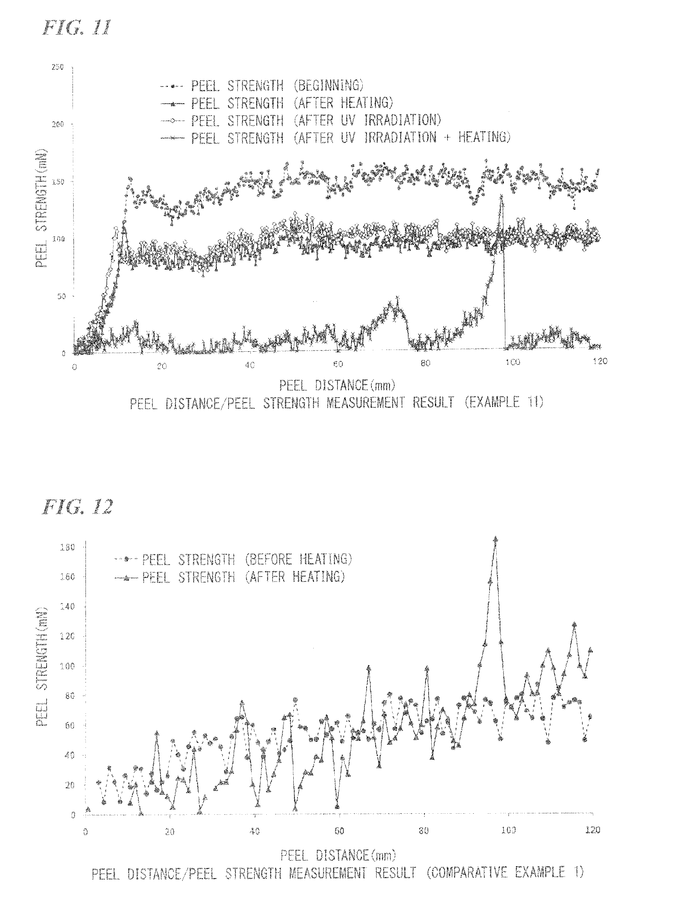

One of the test pieces, which have been bonded by pressure, was allowed to standstill for 1 to 2 hours at room temperature, and then peeled off using a tensile tester at a rate of 30 mm/min to measure a 180° peel strength. One of the test pieces, which have been bonded by pressure, was allowed to standstill for 30 minutes at room temperature, followed by heating for 1 hour at 100°C, and then left (for about 30 minutes) to cool to room temperature. One of the test pieces, which have been bonded by pressure, was allowed to standstill for 30 minutes at room temperature, followed by UV irradiation for 1 hour at room temperature, and then allowed to standstill for another 30 minutes. One of the test pieces, which have been bonded by pressure, was allowed to standstill for 30 minutes at room temperature, followed by UV irradiation for 1 hour at room temperature, then heated for 1 hour at 100°C, and left (for about 30 minutes) to cool to room temperature. These test pieces were peeled off using a tensile tester at a rate of 30 mm/min to measure the 180° peel strength. The obtained results are shown in Table 1 and FIG. 11.

### (Comparative example 1)

The 180° peel strength was measured in the same manner as in Example 1, except that the random copolymer (1) was used instead of the block copolymer (1). The obtained results are shown in Table 1 and FIG. 12.

**[Table 1]**

| | | | Example 1 | Example 2 | Example 3 | Example 4 | Example 5 | Example 6 | Example 7 | Example 8 | Example 9 | Example 10 | Example 11 | Comparative example 1 |
|---|---|---|---|---|---|---|---|---|---|---|---|---|---|---|
| Acrylic polymer (part by mass) | Block copolymer (1) | | 100 | | | | | | | | | | | |
| | Block copolymer (2) | | | 100 | | | | | | | | | | |
| | Block copolymer (3) | | | | 100 | | | | | | | | | |
| | Block copolymer (4) | | | | | 100 | | | | | | | | |
| | Block copolymer (5) | | | | | | 100 | 100 | 100 | | | | | |
| | Block copolymer (6) | | | | | | | | | 100 | | | | |
| | Block copolymer (7) | | | | | | | | | | 100 | | | |
| | Block copolymer (8) | | | | | | | | | | | 100 | | |
| | Block copolymer (9) | | | | | | | | | | | | 100 | |
| | Random copolymer (1) | | | | | | | | | | | | | 100 |
| Molecular weight of acrylic polymer (Mn) | | | 18600 | 20000 | 18500 | 12600 | 19500 | 19500 | 19500 | 11300 | 12800 | 14800 | 8500 | 19800 |
| Amount of carboxyl precursor group contained in acrylic polymer (mol%) | | | 24 | 47 | 72 | 64 | 65 | 65 | 65 | 58 | 62 | 34 | 57 | 50 |
| Acid generator | TS | mol% | 5 | 5 | 5 | | | | | | | | | 5 |
| | | Part by mass | 1.34 | 2.82 | 4.75 | | | | | | | | | 2.88 |
| | BCD | mol% | | | | 7 | | 5 | 7 | | | | | |
| | | Part by mass | | | | 10.23 | | 7.44 | 10.41 | | | | | |
| | NLT | mol% | | | | | 1 | | | 0.2 | 0.2 | 0.5 | 0.3 | |
| | | Part by mass | | | | | 1.54 | | | 0.26 | 0.29 | 0.31 | 0.46 | |
| 180° peel strength (mN/20mm) | Before heating | | 74 | 85 | 61 (SS) | 1100 | 6500 | 6029 | 8019 | 567 | 979 | 288 | 147 | 58 |
| | After heating (*1) | | 30 | 39 | 0 (*4) | 440 | 2500 | 4983 | 3952 | 483 | 991 | 207 | 94 | 46 |
| | After UV irradiation (*2) | | - | | - | 590 | 90 (SS) | 1353 | 305 | 645 | 1308 | 335 | 99 | - |
| | After UV irradiation and heating (*3) | | - | | - | 50 | 36 | 0 (*4) | 50 | 0 (*4) | 0 (*4) | 0 (*4) | 14 | - |
| Decrease rate in peel strength (%) | | | 59 | 54 | 100 | 95 | 99 | 100 | 99.4 | 100 | 100 | 100 | 90.5 | 21 |

| | | | | | | | | | | | | | | |
|---|---|---|---|---|---|---|---|---|---|---|---|---|---|---|
| *1 heating for 1 hour at 100°C *2 UV irradiation at room temperature *3 UV irradiation at room temperature and then heating for 1 hour at 100°C *4 adhesion strength was weak and reached measurement limit (≈0) *5 The decrease rate (%) is a value calculated by a formula of [(peel strength before dismantlement-peel strength after dismantlement)/(peel strength before dismantlement)]. As the decrease rate increases, this shows that the adhesive has been dismantled by heating or light irradiation. | | | | | | | | | | | | | | |

In the table, the 180° peel strength indicates an average between peel distances of 0 mm to 120 mm, and the sign (SS) in the table shows that the sample was dismantled by stick-slip phenomenon.

From Table 1, it was clearly found that the 180° peel strength of Examples 1 and 2, that is, the adhesive tapes formed of the block copolymer (1) or (2), which contains the poly-t-butyl acrylate block in an amount of 24 mol% or 47 mol%, and an acid catalyst effectively decreased after the tapes are heated for 1 hour at 100°C, and the tapes can be suitably dismantled.

Example 3, that is, the adhesive tape formed of the block copolymer (3), which contains the poly-t-butyl acrylate block in an amount of 72 mol%, and an acid catalyst is an adhesive tape showing stick-slip phenomenon in which the tape is intermittently peeled at the time of peeling. However, when being heated for 1 hour at 100°C, the adhesive tape was almost completely peeled off, and could be dismantled until the 180° peel strength could not be measured any more.

In Example 4, that is, in the adhesive tape formed of the block copolymer (4) which contains the poly-t-butyl acrylate block in an amount of 64 mol%, and BCD as a photo-acid generator in an amount of 7 mol%, the 180° peel strength decreased even if either UV irradiation or heating was performed on this tape. When the tape was heated after the UV irradiation, the 180° peel strength markedly decreased, and the dismantlability of the tape was particularly suitable.

In Example 5, that is, in the adhesive tape formed of the block copolymer (5), which contains the poly-t-butyl acrylate block in an amount of 65 mol%, and NIT as a photo-acid generator in an amount of 1 mol%, the 180° peel strength decreased even if either UV irradiation or heating was performed on this tape. When the tape was heated after the UV irradiation, the 180° peel strength markedly decreased, and the dismantlability of the tape was particularly suitable.

In Example 6, that is, in the adhesive tape formed of the block copolymer (5), which contains the poly-t-butyl acrylate block in an amount of 65 mol%, and BCD as a photo-acid generator in an amount of 5 mol%, the 180° peel strength decreased even when the the tape was merely irradiated with UV rays. When the tape was heated after the UV irradiation, the 180° peel strength markedly decreased, and the tape could be particularly suitably dismantled.

In Example 7, that is, in the adhesive tape formed of the block copolymer (5), which contains the poly-t-butyl acrylate block in an amount of 65 mol%, and BCD as a photo-acid generator in an amount of 7 mol%, the 180° peel strength markedly decreased when the tape was subjected to UV irradiation or to heating after UV irradiation, and the tape could be particularly suitably dismantled.

In Example 8, that is, in the adhesive tape formed of the block copolymer (6), which contains the poly-t-butyl acrylate block in an amount of 58 mol%, and NIT as a photo-acid generator in an amount of 0.2 mol%, the 180° peel strength effectively decreased only when the tape was heated after UV irradiation, and the tape could be particularly suitably dismantled.

In Example 9, that is, in the adhesive tape formed of the ABA-type triblock copolymer (7), which contains the poly-t-butyl acrylate block in an amount of 62 mol%, and NIT as a photo-acid generator in an amount of 0.2 mol%, the 180° peel strength effectively decreased only when the tape was heated after UV irradiation, and the tape could be particularly suitably dismantled.

In Example 10, that is, in the adhesive tape formed of the block copolymer (8), which contains the polyisobornyl acrylate block in an amount of 34 mol%, and NIT as a photo-acid generator in an amount of 0.5 mol%, the 180° peel strength effectively decreased only when the tape was heated after UV irradiation, and the tape could be particularly suitably dismantled.

In Example 11, that is, in the adhesive tape formed of the block copolymer (9), which contains the poly-t-butyl acrylate block in an amount of 57 mol%, and NIT as a photo-acid generator in an amount of 0.3 mol%, the 180° peel strength decreased even when either heating or UV irradiation is performed on the tape. When the tape was heated after UV irradiation, the 180° peel strength markedly decreased, and the tape could be particularly suitably dismantled.

On the other hand, in Comparative example 1, that is, in the adhesive tape formed of the random copolymer (1) and an acid catalyst, the 180° peel strength virtually did not decrease even after the tape was heated for 1 hour at 100°C, and the tape did not have an easy dismantlablity.

### Industrial Applicability

It is possible to provide an easily dismantlable adhesive tape, which can be suitably stuck to an object, can fix parts to each other, and can be easily dismantled by heating or energy ray irradiation even if water such as warm water is not used for the dismantlement, and an adhesive composition that can realize an easily dismantlable adhesive tape.

## Claims

1. An easily dismantlable adhesive composition as an adhesive composition, comprising:
an acrylic polymer (X) that contains a (meth)acrylate monomer as a main monomer component; and
an acid catalyst or an acid generator,
wherein the acrylic polymer (X) contains a poly(meth)acrylate chain (A) that is constituted with repeating units derived from a carboxyl precursor group-containing (meth)acrylate monomer (a), and
a number of the repeating units is 10 or greater.

2. The easily dismantlable adhesive composition according to Claim 1,
wherein the acrylic polymer (X) is an acrylic block polymer having the poly(meth)acrylate chain (A) that is formed of repeating units derived from the carboxyl precursor group-containing (meth)acrylate monomer (a) and a poly(meth)acrylate chain (B) that contains repeating units derived from another poly(meth)acrylate monomer (b), and
a number of the repeating units constituting the poly(meth)acrylate chain (A) is 10 or greater.

3. The easily dismantlable adhesive composition according to Claim 1 or 2,
wherein the carboxyl precursor group-containing (meth)acrylate monomer (a) is at least one kind selected from tert-butyl (meth)acrylate, 2-methyl-2-adamantyl (meth)acrylate, 2-ethyl-2-adamantyl (meth)acrylate, bornyl (meth)acrylate, isobornyl (meth)acrylate, cyclohexyl (meth)acrylate, and benzyl (meth)acrylate.

4. The easily dismantlable adhesive composition according to Claim 2 or 3,
wherein the poly(meth)acrylate chain (B) contains at least one kind selected from 2-ethylhexyl (meth)acrylate and n-butyl (meth)acrylate, as a main monomer component.

5. The easily dismantlable adhesive composition according to any one of Claims 2 to 4,
wherein a ratio between the poly(meth)acrylate chain (A) and the poly(meth)acrylate chain (B) in the acrylic polymer is 75/25 to 20/80 in terms of a molar ratio of (A)/(B).

6. An easily dismantlable adhesive tape having an adhesive layer formed of the adhesive composition according to any one of Claims 1 to 5.
